# EUROPEAN PATENT SPECIFICATION

(11) **EP 0 767 051 B1**
(45) Date of publication and mention of the grant of the patent: **13.06.2001**
(21) Application number: 96307189.9
(22) Date of filing: 01.10.1996
(51) Int. Cl.: B29D 30/06, B29C 31/08

(54) **A pallet for a raw tyre and manufacturing method of tyre using the same**
Palette für Reifen und Verfahren zur Reifenherstellung unter Verwendung derselben
Palette pour pneus et procédé de fabrication de pneus utilisant cette palette

(30) Priority: 02.10.1995 JP 25509695; 30.08.1996 JP 23032696
(43) Date of publication of application: 09.04.1997
(73) Proprietor: SUMITOMO RUBBER INDUSTRIES LIMITED, Kobe-shi, Hyogo-ken (JP)
(72) Inventor: Ohya, Yukihide, Kobe-shi, Hyogo-ken (JP)
(74) Representative: Stewart, Charles Geoffrey

(56) References cited:
- EP-A- 0 162 686
- EP-A- 0 425 908
- US-A- 4 252 241
- US-A- 4 681 521

## Description

The present invention relates to a pallet and manufacturing method for a tyre capable of preventing gradual decline of roundness of the tread outer circumferential surface until the raw tyre cover is delivered to the vulcanising step mounted on the pallet, and then enhancing the quality of the completed cured tyre.

In manufacture of a tyre, the raw tyre cover, before vulcanisation, is likely to deform gradually during storage and conveying until it is delivered to the vulcanising press. In particular, distortion occurring tc the tread outer circumferential surface remains in the completed tyre after vulcanising and forming, and this produces variations in the radial direction of the tread outer circumferential surface, so-called radial run-out (RRO). As a result, tyre vibration in driving occurs, and the tread outer circumferential surface is likely to be worn unevenly.

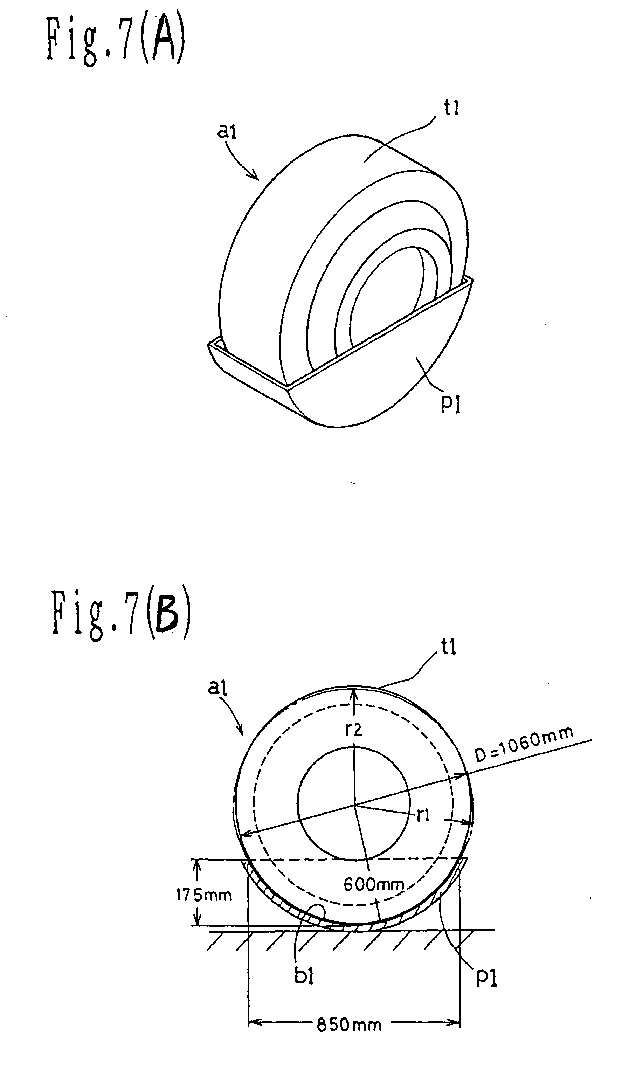

In storing and conveying the raw tyre cover, hitherto, with the primary purpose of minimising the occupied area, the raw tyre cover a1 was held vertically using a crescent pallet p1 having a receiving surface b1 which contacted the tread outer circumferential surface t1 as shown in FIG. 7(A) and 7(B).

However, when the raw tyre cover al is supplied vertically as shown in FIG. 7(A) and 7(B), the entire raw tyre cover al is deformed gradually by its own weight. In particular, the side wall located at the bottom is deformed extremely compared to the side wall at the top side, and hence the radius difference (r1-r2) of the tread outer circumferential surface t1 increases, and the RRO is worsened.

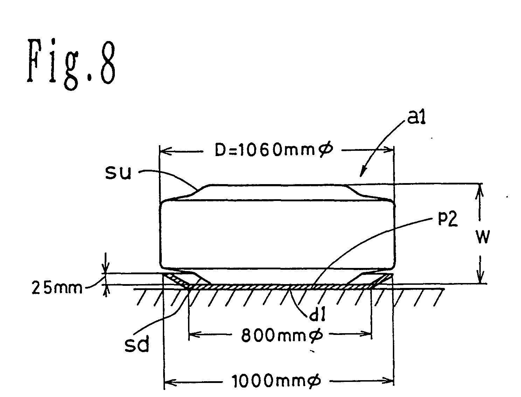

As shown in FIG. 8, alternatively, the raw tyre cover a1 may be laid down on its side placing the outer side surface d1 of the bead region on a dish-like pallet p2.

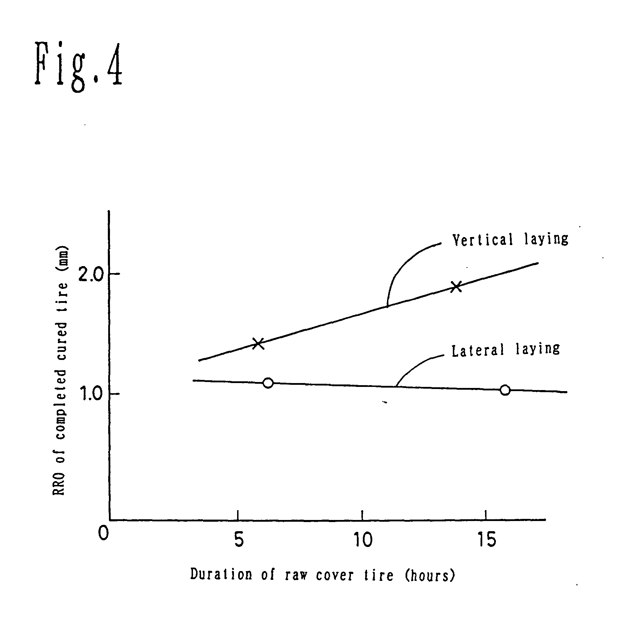

The inventor investigated the relationship between the duration of leaving the raw tyre cover in vertical state and in lateral state, and the RRO of the resultant vulcanised tyre, and obtained the results shown in FIG. 4. The tyre kept lying on its side had a smaller RRO than the tyre kept in the vertical state, and had smaller variations which made it superior in uniformity. In FIG 4, the duration refers to the time from storing the raw tyre cover to the start of vulcanising.

Even in the case of the lying in its side state, however, particularly for large tyre rim size 15 inches or more or for a heavy tyre, the difference is still large between the deformation of the side wall sd on the bottom and the deformation of the side wall su on the top. As a result, the RRO and its variation cannot be decreased sufficiently, and suppression of vibration of the tyre and prevention of occurrence of uneven wear are not sufficient.

It has been proposed in EP 0 425 908 to provide a method of supporting a tyre characterised by a storing or conveying step using a pallet having supporting portions supporting one of the outer side surfaces of the sidewall to the raw tyre cover. This support is in the radially outer part of the of the tyre.

It is a primary object of the invention to provide a pallet for a raw tyre cover and a manufacturing method for the tyre capable of effectively suppressing gradual deformation of the tyre during storage and conveying of the raw tyre, improving the RRO of completed tyre, suppressing tyre vibration while driving, and preventing occurrence of uneven wear.

According to the invention relating to a pallet for raw tyre cover, the raw tyre cover has a tyre outer surface consisting of an outer circumferential surface of a tread, outer side surfaces of beads each with a bead core, and outer side surfaces of side walls extending from the outer circumferential surface of the tread to the outer side surfaces of the beads and varying in the inclination angle to a surface at right angle to the tyre axial centre, and the pallet comprises a circular bottom plate disposed at right angles to the tyre axial centre, and a supporting portion provided radially outside the outer periphery of the bottom plate for supporting one of the outer side surfaces of the side walls of the raw tyre cover, said supporting portion having a first receiving surface of a conical form inclining downwardly toward the bottom plate at an angle α to the bottom plate, and a second receiving surface of a conical form extending upwardly from an upper edge of the first receiving surface at an angle β smaller than the angle α.

A riser wall rising upwardly at an angle γ larger than the angle α is preferably provided between the bottom plate and the supporting portion.

The angles α, β are preferably in a range of 35.5 to 40.6 degrees, and 0 to 16.0 degrees, respectively. The angle γ is also preferably in a range of 70.0 to 90.0 degrees, and more preferably about 90 degrees.

According to another aspect of the invention relating to a manufacturing method of tyre, the manufacturing method of tyre comprises a forming step for forming a raw tyre cover, a vulcanising step for vulcanising the raw tyre cover, and a step of storing or conveying the raw tyre cover between the forming step and the vulcanising step, the raw tyre cover has a tyre outer surface consisting of an outer circumferential surface of a tread, outer side surfaces of beads each with a bead core, and outer side surfaces of side walls extending from the outer circumferential surface of the tread to the outer side surfaces of the beads and varying in the inclination angle to a surface at right angle to the tyre axial centre, and the storing or conveying step uses a pallet having a supporting portion supporting one of the outer side surfaces of the side walls of the raw tyre cover, comprising a circular bottom plate disposed at right angles to the tyre axial centre H, and a supporting portion provided radially outside the outer periphery of the circular bottom plate for supporting one of the outer side surfaces of the side walls of the raw tyre cover, said supporting portion having a first receiving surface having a conical form inclined downwardly towards the bottom plate at an angle α to the bottom plate, and a second receiving surface of a conical form extending upwardly from an upper edge of the first receiving surface at an angle β smaller than the angle α.

An embodiment of the present invention will now be described, by way of example, referring to the attached diagrammatic drawings, in which;
FIG. 1 is a sectional view showing an example of an embodiment of a pallet of the invention;
FIG. 2(A) and 2(B) are sectional views showing examples of usage;
FIG. 3 is a sectional view showing another example of usage;
FIG. 4 is a graph showing the relation of vertical and lateral mounting direction and RRO of a finished tyre;
FIG. 5(A) and 5(B) are sectional views showing embodiments together with dimensions;
FIG. 6 is a perspective view showing a measuring method thereof;
FIG. 7(A) is a perspective view showing a conventional vertical pallet;
FIG. 7(B) is a sectional view showing a second conventional vertical pallet; and
FIG. 8 is a sectional view showing a conventional lateral pallet.

A pallet 1 of the first invention is used for holding a raw tyre cover 2 in a forming step, and storing or conveying the raw tyre cover 2 until it is delivered to a vulcanising step.

The raw tyre cover 2 has a tyre outer surface 7 consisting of an outer circumferential surface 3S of a tread 3 in a substantially cylindrical form (hereinafter called the tread surface 3S), outer side surfaces 5S of two beads 5 each having a bead core 4 (hereinafter called bead surfaces 5S), and outer side surfaces 6S of two side walls 6 linking the tread surface 3S and the bead surfaces 5S (hereinafter called side wall surfaces 6S). The raw tyre cover 2 has cord reinforcing layers including a carcass (not shown) extending between the beads 5 and a belt layer (not shown) disposed radially outside the carcass. The raw tyre cover 2 is a large pneumatic tyre with rim size of 15 inches or more.

The bead surface 5S is disposed substantially parallel to a plane L at right angle to the tyre axial centre H. The tread surface 3S is the outer circumferential surface of a cylindrical body centred about the tyre axial centre H.

The side wall surface 6S comprises, in this example, a side wall main surface 6S1 inclined to and extending from the bead surface 5S inwardly in the tyre axial direction, and a buttress surface 6S2 smoothly connected to the side wall main surface 6S1 and intersecting with the tread surface 3S at an angle close to a right angle.

In this example, the side wall main surface 6S1 and buttress surface 6S2 are formed on two substantially straight regions at mutually different inclination angles. However, the entire side wall surface 6S may be formed as an arc with a continuously increasing inclination angle continuously. In part of the arc a straight portion with a constant inclination angle may be interposed.

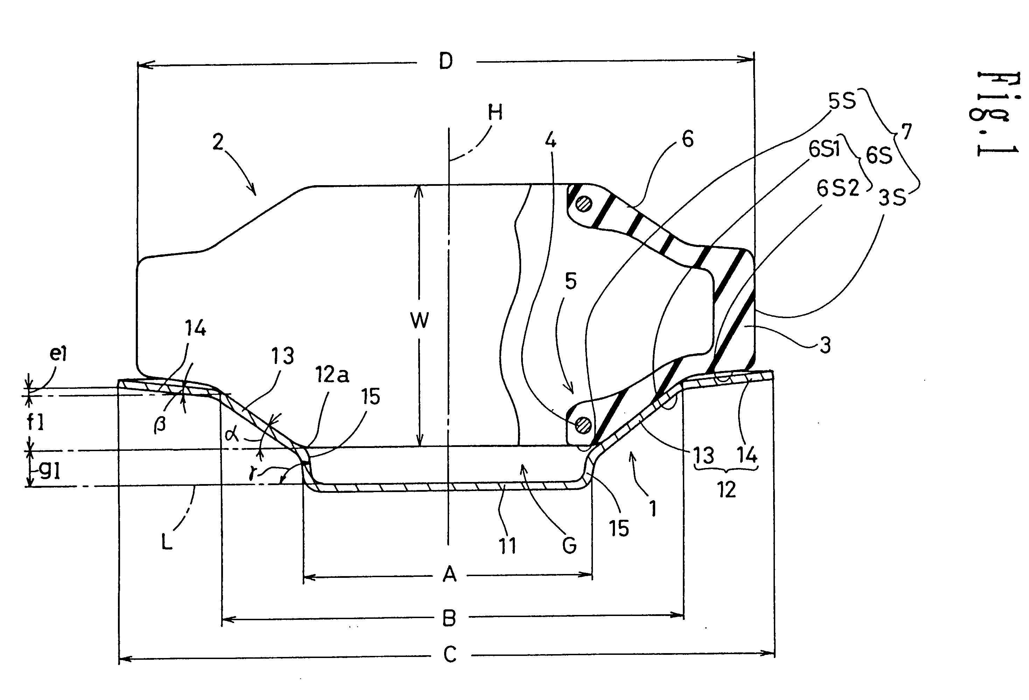

The pallet 1 comprises, as shown in FIG. 1, a circular bottom plate 11 parallel to the plane L, and a supporting portion 12 provided around the bottom plate 11 for mounting and supporting one of the side wall surfaces 6S. The supporting portion 12 comprises a first receiving surface 13 having a conical form inclined downwards toward the bottom plate 11 at an approximately constant angle α to the plane L, arid a second receiving surface 14 of a conical form extending from an upper and radially outer edge of the first receiving surface 13 at an angle β smaller than the angle α.

In this example, a riser wall 15 of a small height projects upwardly from the periphery of the bottom plate 11 to a lower edge 12a of the supporting portion 12 at an angle γ which is larger than the angle α.

Thus, the pallet 1 is formed as a shallow dish form comprising integrally the bottom plate 11, supporting portion 12, and the riser wall 15, and may be made by, for example, pressing metal plate such as steel, casting metal material, synthetic resin material, and many other means.

The angles o and β of the supporting portion 12, and angle γ of the riser wall 15 may be set according to the shape and size of the raw tyre 1 but the relation of the three angles must satisfy the condition of β < α < γ.

The tyre manufacturing method of the second aspect of the invention is to store and/or convey the raw tyre cover 2 using the pallet 1, between the raw tyre cover forming step and the vulcanising step. At this time, the raw tyre cover forming step and vulcanising step are the same as in the prior art.

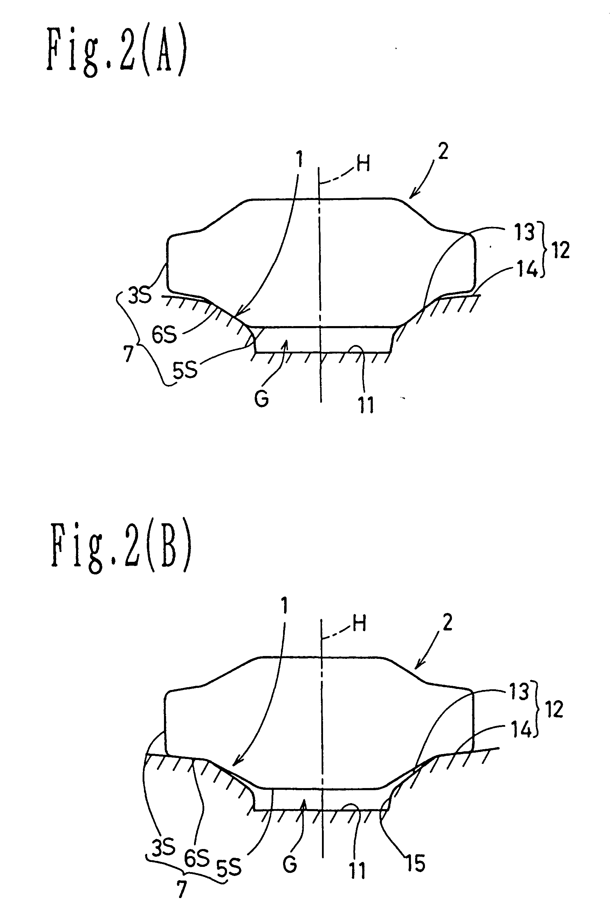

As shown in FIG. 1 and FIG. 2(A), the raw tyre cover 2 is put on the pallet 1 by matching the axes H in the radial direction of the pallet 1 and the raw tyre cover 2. A gap G is left between the bead surface 5S and the bottom plate 11, and therefore, as shown in the example, the side wall main surface 6S1 abuts against the first receiving surface 13 of the pallet 1, and the entire weight of the raw tyre cover 2 is supported by the side wall main surface 6S1. Therefore, the projecting extent of the tread surface 3S in the radial direction from the supporting position, and the projecting extent in the height direction are substantially decreased as compared with the conventional pallet for supporting by the bead surface as shown in FIG. 8. Moreover, since the side wall surface 6S is supported by first contacting with the receiving surface closer to this surface 6S, that is, the first receiving surface 13 in this example, deformation of the side wall surface 6S itself is small, and its changes in the time course can be prevented. As a result, also in the completed tyre after vulcanising, the RRO is improved, the occurrence of vibration is small, and a tyre of high quality suppressed in the occurrence of uneven wear results.

Incidentally, as shown in FIG. 2(B), the raw tyre cover 2 may be held by causing the buttress surface 6S2 of the side wall surface 6S to abut against the second receiving surface 14.

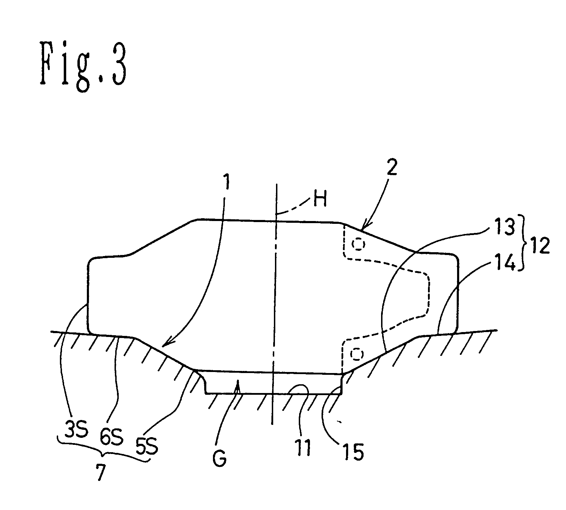

Further, in the case of a raw tyre cover of large diameter or a heavy raw tyre cover, as shown in FIG. 3, the entire surface of the side wall surface 6S and the bead surface 5S may be supported by both the first and second receiving surfaces 13, 14 in collaboration.

Once again a gap G is formed by the riser wall 15 between the bead surface 5S and the bottom plate 11, and therefore the raw tyre cover 2 is securely supported by the side wall surface 6S, so that the raw tyre cover 2 can be mounted at high stability.

Therefore, the angle γ is preferably in a range of 70 to 90 degrees to have a gap G, more preferably about 90 degrees.
In the pallet 1, since the first and second receiving surfaces 12, 13 have different angles α, β, the side wall surface 6S is supported by first contacting the receiving surface 12 or receiving surface 13 closer to this surface 6S. Hence, deformation of the side wall surface 6S itself is suppressed. Moreover, since the inclination angles α and β are different, sufficient versatility is allowed for variations in the diameter of the tyre, that is, tyre size, and raw tyre covers of various types or various sizes can be commonly handled by one pallet.

### EXAMPLES

### I. Standard dimensions of pallet:

The pallet 1 of the embodiment brings about greater effects on the large tyre in the following size.
* Tyre size Rim size 15 inches to 24.5 inches:
* Width (W) of raw tyre cover -----------Max. 600mm:
* Outer diameter (D) of raw tyre cover 880 to 1200mm:

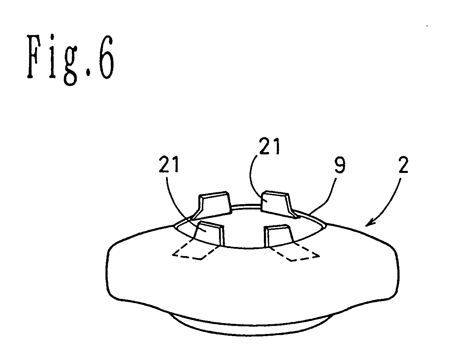

The width (W) of the raw tyre cover, as shown in FIG. 6, was the dimension measured after leaving the tyre in the pallet for an hour, by lifting the upward bead 5 by using four pawls 21.

Preferred principal dimensions of the pallet 1 to be used for the raw tyre cover of the above dimensions are shown in Table 1. In Table 1, symbol A denotes the inner diameter of the first receiving surface 13, B is the outer diameter of the first receiving surface 13, C is the outer diameter of the second receiving surface 14, e1 is the height of the second receiving surface 14, f1 is the height of the first receiving surface 13, and g1 is the height of the riser wall 15.

### II. Setting of the pallet shape:

In laying the raw tyre cover laterally, trials and selections were carried out to find the optimum relation of shape and dimension for the form of the pallet to give the smallest change of RRO.

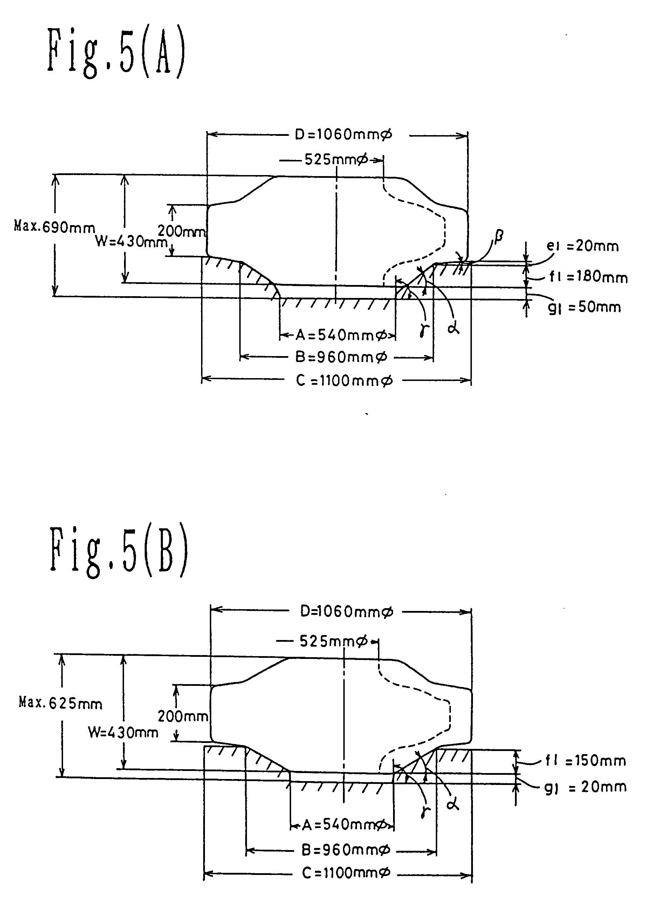

The raw tyre covers used in the tests were in the same dimensions as shown in FIG. 5 (A) and 5(B), and the performance was verified for varying the pallet dimensions.

As a result of the ts, the pallet shape and its inclination angle of the smallest change of RRO are shown in FIG. 5(A) and Table 2, and the pallet shape and its inclination angle suppressing the change of raw tyre cover RRO while considering the stock amount are shown in FIG. 5(B) and Table 2, respectively.

### III. Checking RRO by difference of placing of raw tyre cover:

For tyres having the shape and dimensions shown in FIG. 5(A), trial pallets conforming to the invention having the shape and dimensions of FIG. 5(A) were manufactured, and changes of RRO in completed tyres were studied. Incidentally, using raw tyre cover of the same dimensions. Changes of RRO were compared between the conventional vertical pallet (comparison 1) and lateral pallet (comparison 2).

In both embodiments and comparisons, the values are indicated by the average for five tyres.

The test results are summarised in Table 3.
As a result of the tests, the embodiments were confirmed to be very good in the change of RRO as compared with comparisons 1 and 2. Therefore, the inclination angle α is preferred to be in the range of 35.5 to 40.6 degrees, and the inclination angle β, from 0 to 16.0 degrees.

**Table 1**

| Basic dimensions of pallet (symbol shown in Fig.1) | | | |
|---|---|---|---|
| Dimension (mm) in Radial direction | | Dimension (mm) in Width direction | |
| A | 520 ∼ 560 ⌀ | e1 | 0 ∼ 20 |
| B | 940 ∼ 980 ⌀ | f1 | 150 ∼ 180 |
| C | 1080 ∼ 1120 ⌀ | g1 | 20 ∼ 50 |

**Table 2**

| | Pallet shape for smallest RRO change | Pallet shape for decreasing RRO considering stock amount |
|---|---|---|
| Pallet dimensions | FIG. 5(A) | FIG. 5(B) |
| Angle α | 40.6 deg | 35.5deg |
| Angle β | 16.0 deg | 0.0deg |
| Angle γ | 90.0 deg | 90.0 deg |
| Height of raw tyre cover at mounting | Max. 690 mm | Max. 625 mm |

**Table 3**

| | Embodiment | Comparison 1 | Comparison 2 |
|---|---|---|---|
| Laying direction of raw tyre cover | Lateral | Vertical | Lateral |
| Structure and Dimension of Pallet | FIG. 5(A) | FIG. 7(B) | FIG. 8 |
| Duration of raw tyre cover | 10hr | 10hr | 10hr |
| RRO | 0.99mm | 1.64mm | 1.07mm |

## Claims

1. A pallet for a raw tyre cover, said raw tyre cover (2) having a tyre outer surface (7) consisting of an outer circumferential surface (3S) of a tread (3), outer side surfaces (5S) of beads (5) each with a bead core (4), and outer side surfaces (6S) of side walls (6) extending from the outer circumferential surface (3S) of the tread (3) to the outer side surfaces (5S) of the beads (5) and varying in inclination angle to a surface L at right angle to the tyre axial centre H, said pallet (1) comprising a circular bottom plate (11) disposed at right angles to the tyre axial centre H, characterised by a supporting portion (12) provided radially outside the outer periphery of the circular bottom plate (11) for supporting one of the outer side surfaces (6S) of the side walls (6) of the raw tyre cover (2), said supporting portion (12) having a first receiving surface (13) having a conical form inclined downwardly towards the bottom plate (11) at an angle α to the bottom plate (11), and a second receiving surface (14) of a conical form extending upwardly from an upper edge of the first receiving surface (13) at an angle β smaller than the angle α.

2. A pallet according to claim 1, characterised by a riser wall (15) rising upwardly from the periphery of the bottom plate (11) to a lower edge (12a) of the supporting portion (12) at an angle γ larger than the angle α of the first receiving surface (13).

3. A pallet according to claim 2, characterised in that the angle γ is in a range of 70 to 90 degrees.

4. A pallet according to claim 1, 2 or 3, characterised in that the angle α is in a range of 35.5 to 40.6 degrees, and the angle β is in a range of 0 to 16.0 degrees.

5. A manufacturing method for a tyre comprising a forming step for forming a raw tyre cover (2), a vulcanising step for vulcanising the raw tyre cover (2), and a step of storing or conveying the raw tyre cover (2) between the forming step and the vulcanising step, said raw tyre cover (2) having a tyre outer surface (7) consisting of an outer circumferential surface (3S) of a tread (3), outer side surfaces (5S) of beads (5) each with a bead core (4), and outer side surfaces (6S) of side walls (6) extending from the outer circumferential surface (3S) of the tread (3) to the outer side surfaces (5S) of the beads (5) and varying in the inclination angle to a surface L at right angle to the tyre axial centre H, characterised by the storing or conveying step using a pallet (1) comprising a circular bottom plate (11) disposed at right angles to the tyre axial centre H, and a supporting portion (12) provided radially outside the outer periphery of the circular bottom plate (11) for supporting one of the outer side surfaces (6S) of the side walls (6) of the raw tyre cover (2), said supporting portion (12) having a first receiving surface (13) having a conical form inclined downwardly towards the bottom plate (11) at an angle α to the bottom plate (11), and a second receiving surface (14) of a conical form extending upwardly from an upper edge of the first receiving surface (13) at an angle β smaller than the angle α.

## Patentansprüche

1. Palette für eine Rohreifendecke, wobei die Rohreifendecke (2) eine Reifenaußenfläche (7) aufweist, bestehend aus einer Außenumfangsfläche (3S) eines Laufstreifens (3), Außenseitenflächen (5S) von Wülsten (5), jeweils mit einem Wulstkern (4), und Außenseitenflächen (6S) von Seitenwänden (6), die sich von der Außenumfangsfläche (3S) des Laufstreifens (3) zu den Außenseitenflächen (5S) der Wülste (5) erstrecken und deren Neigungswinkel zu einer unter einem rechten Winkel zur axialen Reifenmitte H stehenden Fläche L variiert, wobei die Palette (1) eine kreisförmige Bodenplatte (11) umfaßt, die rechtwinklig zur axialen Reifenmitte H angeordnet ist, gekennzeichnet durch einen Unterstützungsabschnitt (12), der radial außerhalb des Außenumfangs der kreisförmigen Bodenplatte (11) vorgesehen ist, um eine der Außenseitenflächen (6S) der Seitenwände (6) der Rohreifendecke (2) zu unterstützen, wobei der Unterstützungsabschnitt (12) eine erste Aufnahmefläche (13) mit einer konischen Form, die nach unten in Richtung der Bodenplatte (11) unter einem Winkel α zur Bodenplatte (11) geneigt ist, und eine zweite Aufnahmefläche (14) von einer konischen Form aufweist, die sich von einer oberen Kante der ersten Aufnahmefläche (13) unter einem Winkel β, der kleiner als der Winkel α ist, nach oben erstreckt.

2. Palette nach Anspruch 1, gekennzeichnet durch eine Steigwand (15), die vom Umfang der Bodenplatte (11) aus zu einer unteren Kante (12a) des Unterstützungsabschnitts (12) unter einem Winkel γ, der größer als der Winkel α der ersten Aufnahmefläche (13) ist, nach oben ansteigt.

3. Palette nach Anspruch 2, dadurch gekennzeichnet, daß der Winkel γ im Bereich von 70 bis 90 Grad liegt.

4. Palette nach Anspruch 1, 2 oder 3, dadurch gekennzeichnet, daß der Winkel α in einem Bereich von 35,5 bis 40,6 Grad liegt, und daß der Winkel β in einem Bereich von 0 bis 16,0 Grad liegt.

5. Herstellungsverfahren für einen Reifen mit einem Formungsschritt zum Formen einer Rohreifendecke (2), einem Vulkanisierschritt zum Vulkanisieren der Rohreifendecke (2) und einem Schritt zum Lagern oder Befördern der Rohreifendecke (2) zwischen dem Formungsschritt und dem Vulkanisierschritt, wobei die Rohreifendecke (2) eine Reifenaußenfläche (7) aufweist, bestehend aus einer Außenumfangsfläche (3S) eines Laufstreifens (3), Außenseitenflächen (5S) von Wülsten (5), jeweils mit einem Wulstkern (4), und Außenseitenflächen (6S) von Seitenwänden (6), die sich von der Außenumfangsfläche (3S) des Laufstreifens (3) zu den Außenseitenflächen (5S) der Wülste (5) erstrecken und deren Neigungswinkel zu einer unter einem rechten Winkel zur axialen Reifenmitte H stehenden Fläche L variiert, dadurch gekennzeichnet, daß der Lagerungs- oder Beförderungsschritt eine Palette (1) verwendet, die eine kreisförmige Bodenplatte (11) umfaßt, die rechtwinklig zur axialen Reifenmitte H angeordnet ist, und einen Unterstützungsabschnitt (12) umfaßt, der radial außerhalb des Außenumfangs der kreisförmigen Bodenplatte (11) vorgesehen ist, um eine der Außenseitenflächen (6S) der Seitenwände (6) der Rohreifendecke (2) zu unterstützen, wobei der Unterstützungsabschnitt (12) eine erste Aufnahmefläche (13) mit einer konischen Form, die nach unten in Richtung der Bodenplatte (11) unter einem Winkel α zur Bodenplatte (11) geneigt ist, und eine zweite Aufnahmefläche (14) von einer konischen Form aufweist, die sich von einer oberen Kante der ersten Aufnahmefläche (13) unter einem Winkel β, der kleiner als der Winkel α ist, nach oben erstreckt.

## Revendications

1. Palette destinée à un organe de recouvrement non vulcanisé de pneumatique, l'organe de recouvrement non vulcanisé (2) de pneumatique ayant une surface externe (7) de pneumatique constituée d'une surface circonférentielle externe (3S) d'une bande de roulement (3), de surfaces latérales externes (5S) de talon (5) ayant chacune une tringle (4), et de surfaces latérales externes (6S) de paroi latérale (6) s'étendant depuis la surface circonférentielle externe (3S) de la bande de roulement (3) vers les surfaces latérales externes (5S) des talons (5) et ayant un angle d'inclinaison qui varie par rapport à une surface L perpendiculaire à l'axe central H du pneumatique, la palette (1) comprenant une plaque inférieure circulaire (11) disposée perpendiculairement à l'axe central du pneumatique H, caractérisée par une partie de support (12) disposée radialement à l'extérieur de la périphérie externe de la plaque inférieure circulaire (11) pour le support de l'une des surfaces latérales externes (6S) des parois latérales (6) de l'organe de recouvrement non vulcanisé (2) de pneumatique, la partie de support (12) ayant une première surface réceptrice (13) de forme conique inclinée vers le bas vers la plaque inférieure (11) suivant un angle α par rapport à la plaque inférieure (11), et une seconde surface réceptrice (14) de forme conique s'étendant vers le haut depuis un bord supérieur de la première surface réceptrice (13) avec un angle β inférieur à l'angle α.

2. Palette selon la revendication 1, caractérisée par une paroi (15) qui remonte au-dessus de la périphérie de la plaque inférieure (11) vers un bord inférieur (12a) de la partie de support (12) avec un angle γ supérieur à l'angle α de la première surface réceptrice (13).

3. Palette selon la revendication 2, caractérisée en ce que l'angle γ est compris entre 70 et 90°.

4. Palette selon la revendication 1, 2 ou 3, caractérisée en ce que l'angle α est compris entre 35,5 et 40,6°, et l'angle β est compris entre 0 et 16,0°.

5. Procédé de confection d'un pneumatique, comprenant une étape de mise en forme d'un organe de recouvrement non vulcanisé (2) de pneumatique, une étape de vulcanisation de l'organe de recouvrement non vulcanisé (2) de pneumatique, et une étape de stockage ou de transport de l'organe de recouvrement non vulcanisé (2) de pneumatique entre l'étape de mise en forme et l'étape de vulcanisation, l'organe de recouvrement non vulcanisé (2) de pneumatique ayant une surface externe (7) de pneumatique constituée d'une surface circonférentielle externe (3S) d'une bande de roulement (3), de surfaces latérales externes (5S) de talon (5) ayant chacune une tringle (4), et de surfaces latérales externes (6S) de paroi latérale (6) qui s'étendent de la surface circonférentielle externe (3S) de la bande de roulement (3) vers les surfaces latérales externes (5S) des talons (5) et ayant un angle d'inclinaison qui varie par rapport à une surface L perpendiculaire à l'axe central H du pneumatique, caractérisé en ce que l'étape de stockage et de transport met en oeuvre une palette (1) qui comprend une plaque inférieure circulaire (11) disposée perpendiculairement à l'axe central H du pneumatique, et une partie de support (12) disposée radialement à l'extérieur de la périphérie externe de la plaque inférieure circulaire (11) pour le support de l'une des surfaces latérales externes (6S) des parois latérales (6) de l'organe de recouvrement non vulcanisé (2) de pneumatique, la partie de support (12) ayant une première surface réceptrice (13) de forme conique inclinée vers le bas vers la plaque inférieure (11) d'un angle α par rapport à la plaque inférieure (11), et une seconde surface réceptrice (14) de forme conique s'étendant vers le haut depuis un bord supérieur de la première surface réceptrice (13) avec un angle β inférieur à l'angle α.
